# EUROPEAN PATENT APPLICATION

(11) **EP 1 630 596 A1**
(43) Date of publication of application: **01.03.2006**
(21) Application number: 04733168.1
(22) Date of filing: 14.05.2004
(51) Int. Cl.: G03B 21/60

(54) **SCREEN AND ITS MANUFACTURING METHOD**

(30) Priority: 15.05.2003 JP 2003137795; 15.03.2004 JP 2004072201
(71) Applicant: SONY CORPORATION, Tokyo 141-0001 (JP)
(72) Inventor: MORISAWA, Kazuhiko, Shinagawa-ku, Tokyo (JP); KATAKURA, Hitoshi, Shinagawa-ku, Tokyo (JP); HOSOYA, Ken, Shinagawa-ku, Tokyo (JP)
(74) Representative: Müller, Frithjof E.
(86) International application number: PCT/JP2004/006901
(87) International publication number: WO 2004/102269

(57) **Abstract**

A screen achieving high contrast and high gain and a method for producing a screen, which is favorable in mass-productivity, are provided.

The screen has an optical multilayer film, which has a high reflection property with respect to light in a specific wavelength region and a high transmission property with respect to at least visible light in wavelength regions other than the specific wavelength region. The optical multilayer film has a stacked structure in which a first optical film (12H) having a high refractive index and a second optical film (12L) having a lower refractive index than that of said first optical film are alternately stacked on both surfaces of a transparent base (11) by coating, and the outermost layer of the optical multilayer film is formed by the first optical film, the optical multilayer film being comprised of (2n+1) layers (where n is an integer of 1 or more).

## Description

### TECHNICAL FIELD

The present invention relates to a screen and a process for producing the same.

### BACKGROUND ART

In recent years, as means of presenting materials from a speaker in a meeting and the like, overhead projectors and slide projectors are widely used. Further, video projectors and moving image film projectors using liquid crystal for home use are being spread. A projection method in these projectors is such that light emitted from a light source is modulated by a light valve to form image light, and the image light is projected on a screen through an optical system, such as a lens.

The projectors of this type include one which allows color images to appear using, as a light source, a lamp emitting white light including light of three primary colors, i.e., red (R), green (G), and blue (B) light, and using a transmissive liquid-crystal panel as a light valve. In this projector, white light emitted from the light source is split by a lighting optical system into rays of red light, green light, and blue light, and the individual rays of light are converged to predetermined optical paths. These light fluxes are spatially modulated by the liquid-crystal panel according to the image signals, and the modulated light fluxes are combined by a light combining part to form color image light, and the color image light combined is magnified by means of a projection lens and projected on a screen to allow a viewer see images on the screen.

Further, recently, as a projector which allows color images to appear, an apparatus using a narrow-band three primary-color light source as a light source, for example, a laser oscillator emitting each of narrow-band light of RGB three primary colors, and using a grating light valve (hereinafter, referred to as "GLV") as a light valve has been developed. In this projector, light fluxes of the individual colors emitted from the laser oscillator are spatially modulated by the GLV according to the image signals, and the modulated light fluxes are combined by a light combining part to form color image light sharper than that formed by any conventional projectors. The color image light is magnified by means of a projection lens and projected on a screen to allow a viewer see images on the screen.

As a screen for use in the projector, for example, there is a screen which reflects the image light emitted from a projector (front projector) in front of the screen to allow a viewer see an image projected on the screen by observing the reflected light, and there has been provided, for example, a screen having a construction in which a reflective layer having predetermined viewing angle properties, a light absorbing layer, and a diffusion layer are successively formed on a base, and having improved contrast performance (see, for example, Patent document 1).

Patent document 1: specification of Japanese Patent No. 3103802 (paragraphs 0017 and 0018, FIG. 1)

However, in the above screen, the reflective layer, which is comprised of an aluminum foil, reflects not only the image light but also ambient light, and hence the improvement of the contrast performance is not satisfactory. In addition, the light absorbing layer, which is closer to the surface side than the reflective layer, absorbs not only ambient light but also the image light reflected by the reflective layer, causing a problem in that the white level of the image on the screen is lowered.

In view of the above problems accompanying the conventional technique, a task of the present invention is to provide a screen achieving high contrast and high gain and a process for producing a screen, which is favorable in mass-productivity.

### DISCLOSURE OF THE INVENTION

For solving the above problems, the same applicant as the present applicant has proposed a screen which reflects mainly the image light emitted from a projector using a selectively reflective layer for selectively reflecting light according to the wavelength region so as not to reflect light other than the light from the projector, e.g., light from fluorescent lightning, sun, or the like, i.e., ambient light (e.g., Japanese Patent Application No. 2002-070799). This screen has a selectively reflective layer formed on a base, a diffusion layer, formed on the front side of the selectively reflective layer, for diffusing the reflected light, and an absorbing layer, formed on the back side of the selectively reflective layer, for absorbing the transmitted light. The selectively reflective layer is an optical multilayer film including an optical film having a high refractive index and an optical film having a low refractive index, which films are alternately stacked on one another, and has properties such that it reflects light in the wavelength regions of the projector light, for example, light in the wavelength regions of three primary colors, i.e., red (R), green (G), and blue (B) and transmits light in wavelength regions other than the wavelength regions of three primary colors. In this screen, the adverse effect of ambient light can be considerably suppressed, and therefore the black level can be lowered without lowering the screen gain even in a brightly lit room, allowing a sharp image with high contrast to appear on the screen.

However, the high refractive-index layer and low refractive-index layer must be formed by a dry process, such as a sputtering process, and the size of a vacuum treatment chamber in a deposition machine is limited, and hence the size of a base which can be placed in the treatment chamber is limited, thus making it difficult to increase the size of the screen. In addition, the use of a dry process restricts the mass-production.

Further, for obtaining an optical film having a high reflectance, the number of stacked layers constituting the optical film must be increased, and therefore the number of steps for forming the optical film is inevitably increased, causing the product yield of the screen to lower.

The inventors have paid attention to the fact that a dry process causes the above problems and have made extensive and intensive studies. As a result, they have completed the invention of a screen which is advantageous not only in that it can be increased in size and has favorable mass-productivity, but also in that it can achieve high contrast and high gain as well as high reflectance, and a process for producing the screen.

Specifically, the screen of the invention of claim 1 provided for solving the above problems is
characterized in that it includes an optical multilayer film on a base, the optical multilayer film being comprised of (2n+1) layers (where n is an integer of 1 or more), which have high reflection properties with respect to light in a specific wavelength region and high transmission properties with respect to at least visible light in wavelength regions other than the specific wavelength region; wherein the optical multilayer film is formed by coating.

By the invention of claim 1, the optical multilayer film can be formed on the base having a larger size than that of a base used in a dry process, enabling realization of a large size screen having high contrast and high gain.

The screen of the invention of claim 2 provided for solving the above problems is the screen according to the invention of claim 1, characterized in that the base is transparent and the optical multilayer film is formed on both surfaces of the base by coating.

By the invention of claim 2, the total number of stacked layers constituting the optical multilayer film in the screen is two times that of a conventional screen having an optical multilayer film only on one surface even when the number of stacked layers constituting the optical multilayer film per one surface is the same as that of the conventional screen, so that high reflectance can be achieved.

Formation of the optical films on both surfaces of the base may be made in a way of dipping the base in a predetermined coating composition. In this case, it is preferred that the transparent base has a refractive index of 1.30 to 1.69.

The screen of the invention of claim 3 provided for solving the above problems is the screen according to the invention of claim 1, characterized in that the optical multilayer film has a stacked structure including a first optical film having a high refractive index and a second optical film having a lower refractive index than that of the first optical film, wherein the first optical film and the second optical film are alternately stacked on one another, and the outermost layer of the optical multilayer film is comprised of the first optical film.

The screen of the invention of claim 4 provided for solving the above problems is the screen according to the invention of claim 3, characterized in that the first optical film is a film containing metal oxide fine particles, a dispersant, and a binder, and the second optical film is a film containing fluorine-containing resin or SiO₂ fine particles.

The screen of the invention of claim 5 provided for solving the above problems is the screen according to the invention of claim 4, characterized in that the metal oxide fine particles are TiO₂ or ZrO₂ fine particles.

By the inventions of claims 3 to 5, the optical multilayer film is comprised of an odd number of layers so that the outermost layer on each of the projector light incident side and the opposite side is comprised of the first optical film having a high refractive index, and therefore has a favorable function of a selectively reflective layer. Further, the thickness of each of the first optical film and the second optical film can be arbitrarily selected to form an optical multilayer film having properties such that it reflects light in a desired wavelength region and transmits light in wavelength regions other than the above wavelength region, thus enabling realization of a screen according to the projector light source and having high contrast and high gain as well as high reflectance.

The screen of the invention of claim 6 provided for solving the above problems is the screen according to the invention of claim 3, characterized in that the specific wavelength region includes wavelength regions of red, green, and blue.

By the invention of claim 6, there can be obtained a screen on which favorable image with high contrast for an RGB light source can be seen.

Specifically, in the invention of claim 3, when the refractive index of the first optical film is adjusted to be 1.70 to 2.10, the refractive index of the second optical film is adjusted to be 1.30 to 1.69, and the thickness of each of the first optical film and the second optical film is adjusted to be in the range of 80 nm to 15 µm, there is obtained the optical multilayer film having properties such that it reflects the projector light in the wavelength regions of RGB three primary colors and transmits light in wavelength regions other than the wavelength regions of three primary colors.

The screen of the invention of claim 7 provided for solving the above problems is the screen according to the invention of claim 1, characterized by having a light absorbing layer for absorbing the light which has passed through the optical multilayer film.

By the invention of claim 7, the light which has passed through the optical multilayer film is absorbed, so that favorable image with higher contrast can be seen on the screen.

A black film may be laminated as the light absorbing layer at a predetermined position.

The screen of the invention of claim 8 provided for solving the above problems is the screen according to the invention of claim 1, characterized by having, on the outermost layer of the optical multilayer film, a light diffusion layer for diffusing the light reflected by the optical multilayer film.

By the invention of claim 8, the light selectively reflected by the optical multilayer film is diffused when it passes through the light diffusion layer and goes out of it, so that a viewer can see a natural image by observing the reflected light diffused.

The method for producing a screen of the invention of claim 9 provided for solving the above problems is a method for producing a screen including an optical multilayer film on a base, the optical multilayer film being comprised of (2n+1) layers (where n is an integer of 1 or more), which have high reflection properties with respect to light in a specific wavelength region and high transmission properties with respect to at least visible light in wavelength regions other than the specific wavelength region, wherein a production process for producing the optical multilayer film, is characterized by including first coating step for forming by coating a first optical film having a high refractive index, and a second coating step for forming by coating a second optical film having a lower refractive index than that of the first optical film, and the first coating step and the second coating step are alternately conducted.

By the invention of claim 9, the optical multilayer film can be more easily formed on the base having a larger size than that of a base used in a dry process, enabling mass-production of a large size screen having high contrast and high gain.

It is preferred that the first coating step and the second coating step are alternately conducted in a predetermined number of cycles and the final step of the process is the first coating step. Thus, the optical multilayer film is comprised of (2n+1) layers so that the outermost layer on each of the projector light incident side and the opposite side is comprised of the high refractive-index optical film, and therefore has a favorable function of a selectively reflective layer.

The process for producing a screen of the invention of claim 10 provided for solving the above problems is a method for producing a screen including optical multilayer films on both surfaces of a transparent base, each optical multilayer film being comprised of (2n+1) layers (where n is an integer of 1 or more) which have high reflection properties with respect to light in a specific wavelength region and high transmission properties with respect to at least visible light in wavelength regions other than the specific wavelength region, wherein a production process for preparing the optical multilayer films is characterized by including a first coating step for forming by dipping a first optical film having a high refractive index on both surfaces of a base to be coated, and a second coating step for forming by dipping a second optical film having a lower refractive index than that of the first optical film on the both surfaces of the base to be coated, and the first coating step and the second coating step are alternately conducted.

By the invention of claim 10, the optical multilayer film comprised of a desired number of stacked layers can be prepared in a reduced number of steps for forming the optical films, so that the product yield of the large size screen having high contrast and high gain as well as high reflectance is improved, enabling mass-production of the screen.

The method for producing a screen of the invention of claim 11 provided for solving the above problems is the method according to the invention of claim 10, characterized by including a step for forming, on the outermost layer of one optical multilayer film, a light absorbing layer for absorbing the light which has transmitted through the optical multilayer film.

The method for producing a screen of the invention of claim 12 provided for solving the above problems is the method according to the invention of claim 11, characterized by including a step for forming, on the outermost layer of another optical multilayer film, a light diffusion layer for diffusing the light reflected by the optical multilayer film.

By the invention of claim 13, the light diffusion layer which diffuses the light selectively reflected by the optical multilayer film and permits it to go is formed, making it possible to produce a screen on which a viewer can see a natural image by observing the reflected light diffused.

By the invention of claim 14, the light absorbing layer which absorbs the light which has transmitted through the optical multilayer film is formed, making it possible to produce a screen on which favorable image with higher contrast can be seen.

### BRIEF DESCRIPTION OF THE DRAWINGS

FIG. 1 is a cross-sectional view showing a construction of a screen according to one embodiment of the present invention.
FIG. 2 is a cross-sectional view showing a construction of a screen according to another embodiment of the present invention.

### BEST MODE FOR CARRYING OUT THE INVENTION

Hereinbelow, the embodiments of the screen of the present invention will be described. The following embodiments are merely examples, which should not be construed as limiting the scope of the present invention.

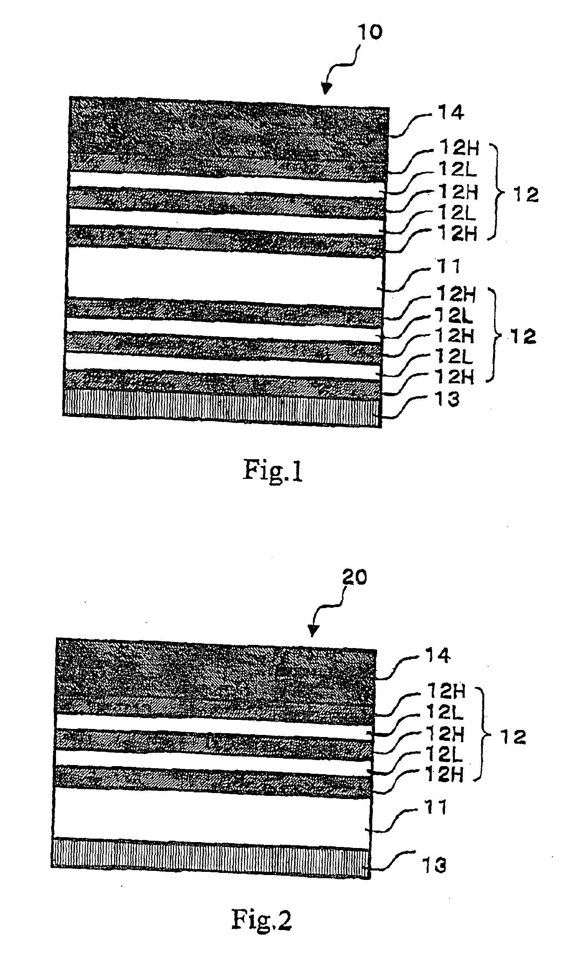

An example of the construction of a screen of the present invention is shown in FIG. 1. A screen 10 has a construction such that optical multilayer films 12, a light absorbing layer 13, and a light diffusion layer 14 are formed on a base 11.

The base 11 may be comprised of any material which is transparent and satisfies desired optical properties, such as a transparent film, a glass plate, an acrylic plate, a methacryl styrene plate, a polycarbonate plate, a lens, or the like. It is preferred that the material constituting the base 11 has optical properties such that the refractive index is 1.3 to 1.7, the haze is 8% or less, and the light transmittance is 80% or more. The base 11 may have an anti-glare function.

The transparent film is preferably a plastic film, and, as a material constituting this film, preferred are, for example, cellulose derivatives {e.g., diacetyl cellulose, triacetyl cellulose (TAC), propionyl cellulose, butyryl cellulose, acetyl propionyl cellulose, and nitrocellulose}; (meth)acrylic resins, such as polymethyl methacrylate, and copolymers of methyl methacrylate and another vinyl monomer, such as an alkyl (meth)acrylate or styrene; polycarbonate resins, such as polycarbonate and diethylene glycol bisallyl carbonate (CR-39); thermosetting (meth)acrylic resins, such as homopolymers or copolymers of (brominated) bisphenol A di(meth)acrylate, and polymers or copolymers of a (brominated) bisphenol A mono(meth)acrylate urethane-modified monomer; polyesters, especially polyethylene terephthalate, polyethylene naphthalate, and unsaturated polyester; acrylonitrile-styrene copolymers; polyvinyl chloride; polyurethane; and epoxy resins. In addition, aramid resins having a heat resistance can be used. In this case, the upper limit of the heating temperature is 200°C or higher, and hence it is expected that the temperature range for the film is broader.

The plastic film can be obtained by a method in which the above resin is stretched or diluted with a solvent and formed in a film and then dried. The thickness of the film is preferably larger from the viewpoint of obtaining stiffness and preferably smaller from the viewpoint of suppressing the haze, and is generally about 25 to 500 µm.

The plastic film may have a surface covered with a coat material, such as a hard coat, and the coat material formed under the optical multilayer film comprised of an inorganic material and an organic material possibly improves various properties, such as adhesion properties, hardness, chemical resistance, durability, and dyeing properties.

Alternatively, an optically functional thin film, or a primary layer as a surface treatment for the transparent base may be formed on the base 11. Examples of the primary layers include organoalkoxymetal compounds, polyester, acryl-modified polyester, and polyurethane. Further, it is preferred that the base is subjected to corona discharge or UV irradiation treatment.

An essential feature of the present invention resides in the optical multilayer film 12, which includes an optical film 12H having a high refractive index obtained by coating on the base a material A for the optical film described below as a first optical film and curing it, and an optical film 12L having a low refractive index obtained by coating a material B for the optical film described below as a second optical film and curing it wherein the optical film 12H and the optical film 12L are alternately stacked on one another. Specifically, the optical multilayer film 12 has a construction such that the optical film 12H having a high refractive index is first formed on the base, and then the optical film 12L having a low refractive index is formed thereon, and subsequently the optical film 12H and the optical film 12L are alternately formed, and finally the optical film 12H is formed, namely, the optical multilayer film 12 is a stacked film comprised of (2n+1) layers (where n is an integer of 1 or more).

The optical film 12H is an optical film formed by coating the material A for optical film on the base 11 or optical film 12L and then effecting a curing reaction for the material. The optical film 12H contains fine particles for controlling the refractive index.

The optical film 12H preferably has a thickness of 80 nm to 15 µm, more preferably 600 to 1,000 nm. When the thickness of the optical film 12H is larger than 15 µm, the amount of a haze component comprised of the undispersed fine particles is increased, making it difficult to achieve an appropriate function of the optical film.

The optical film 12H preferably has a refractive index of 1.70 to 2.10. When the refractive index of the optical film 12H is higher than 2.10, the dispersion property of the fine particles is unsatisfactory, so that the function of the optical film deteriorates. On the other hand, when the refractive index of the optical film 12H is lower than 1.70, the reflection properties obtained after stacking the optical film 12L on the optical film 12H become unsatisfactory, so that the resultant screen disadvantageously has unsatisfactory properties.

The optical film 12L is an optical film having a refractive index of 1.30 to 1.69 formed by coating the material B for optical film on the optical film 12H and then effecting a curing reaction for the material. The refractive index of the optical film 12L is determined depending on the type of the resin contained in the material B for optical film and optionally the type and amount of the fine particles contained. When the refractive index of the optical film 12L is higher than 1.69, a difference in refractive index between the optical film 12L and the optical film 12H cannot be secured, and hence the reflection properties obtained after stacking the optical film 12L on the optical film 12H become unsatisfactory, so that the resultant screen disadvantageously has unsatisfactory properties. Further, it is difficult to form a film having a refractive index lower than 1.3, and therefore the refractive index of 1.3 is the lower limit from the viewpoint of the production.

The optical film 12L preferably has a thickness of 80 nm to 15 µm, more preferably 600 to 1,000 nm.

By virtue of having the above-described construction, the optical multilayer film 12 has high reflection properties with respect to light in three wavelength regions, i.e., red, green, and blue light, and has high transmission properties with respect to at least visible light in wavelength regions other than the three wavelength regions. By changing the refractive index or thickness of each of the optical films 12H, 12L, the wavelength in the three wavelength regions to be reflected by the optical multilayer film 12 can be shifted and controlled, so that the optical multilayer film 12 can appropriately deal with the wavelength of the light emitted from a projector.

With respect to the number of layers of the optical films 12H, 12L constituting the optical multilayer film 12, there is no particular limitation, and the optical films 12H, 12L may have a desired number of layers. It is preferred that the optical multilayer film 12 is comprised of an odd number of layers so that the outermost layer on each of the projector light incident side and the opposite side is comprised of the optical film 12H. The optical multilayer film 12 comprised of an odd number of layers has a more favorable function of a filter for the wavelength regions of the three primary colors than that of an optical multilayer film comprised of an even number of layers.

Specifically, it is preferred that the optical multilayer film 12 is comprised of an odd number of layers in the range of three to seven layers. When the number of layers is two or less, the optical multilayer film 12 unsatisfactorily functions as a reflective layer. On the other hand, the larger the number of layers constituting the optical multilayer film, the higher the reflectance of the optical multilayer film, but, when the number of layers is eight or more, the increase rate of the reflectance is small, and the effect of improving the reflectance expected by increasing the time for forming the optical multilayer film 12 cannot be obtained.

The light absorbing layer 13 absorbs the light which has passed through the optical multilayer film 12, and FIG. 1 illustrates, for example, an embodiment in which a black resin film is stuck on the surface of the outermost layer of the optical multilayer film 12.

Alternatively, the light absorbing layer 13 may be a layer obtained by coating a black coating composition.

Examples of black coating compositions include fine particles, such as carbon black fine particles and silica fine particles having surfaces coated with carbon black. These fine particles may be electrically conductive.

As a method for preparing the carbon black fine particles, an oil furnace method, a channel method, a lamp method, and a thermal method have been known.

When the fine particles are used for the purpose of deepening the blackness, the primary particle size and dispersion property of the fine particles are important factors in determining the blackness of the film, and fine particles having a smaller primary particle size and a larger surface area further improves the jet-blackness. Carbon black having a large amount of surface functional groups has a high affinity with a vehicle having a polar functional group, such as an OH group or a carboxyl group, e.g., an alkyd resin, and, when used together with a hydrocarbon solvent having low polarity, the carbon black has increased wettability with a resin, thus improving the resultant film in gloss and jet-blackness. In addition, a curing agent having an isocyanate group or carboxyl group, which has reactivity with a functional group in the above resin, is advantageously added to the fine particles to cure the film.

Generally, the amount of surface functional groups in channel carbon is larger than that of furnace carbon, but the amount of functional groups in the carbon prepared by a furnace method can be increased by oxidizing the carbon. Carbon black preferably has a primary particle size of 30 nm or less, more preferably 20 nm or less. When carbon black having a larger particle size is used, the resultant film is lowered in jet-blackness, so that the performance of the film as a light absorbing layer deteriorates.

The coating method may be a conventionally known method, such as screen coating, blade coating, or spray coating.

The light absorbing layer 13 preferably has a thickness of about 10 to 50 µm, more preferably 15 to 25 µm. If the thickness of the light absorbing layer is smaller than 10 µm, the jet-blackness is disadvantageously lowered, especially when the spray coating is used. On the other hand, when the thickness is larger than 50 µm, the resultant film is such brittle that a crack is likely to be formed in the film.

The light diffusion layer 14 has one surface in an uneven form, and, with respect to the constituent material for the light diffusion layer, there is no particular limitation as long as it transmits the light in the wavelength region used in a projector, and glass or a plastic generally used in a diffusion layer may be used. For example, a transparent epoxy resin may be applied to the optical multilayer film 12 and embossed to form an uneven surface, or a diffusion film having an uneven surface may be laminated on the optical multilayer film. The light selectively reflected by the optical multilayer film 12 is diffused when it passes through the light diffusion layer 14 and goes out of it, so that a viewer can see a natural image by observing the reflected light diffused. The diffusion angle at the light diffusion layer 14 is an important factor in determining the visibility, and the diffusion angle is increased by controlling the refractive index of the material constituting the diffusion sheet or the form of the uneven surface.

When the light source of a projector is laser, for preventing generation of a speckle pattern which is dispersion on the screen, it is advantageous that the surface form pattern of the light diffusion layer 14 is random.

The screen 10 makes possible selective reflection such that the light in a specific wavelength from a projector is reflected and incident light on the screen in wavelength regions other than the specific wavelength, e.g., ambient light is transmitted and absorbed, lowering the black level of an image on the screen 10 to achieve high contrast, thus allowing an image with high contrast to appear on the screen even in a brightly lit room. For example, when light from an RGB light source, such as a grating projector using a grating light valve (GLV), is projected on the screen 10, favorable image with high contrast free from an adverse effect of ambient light can be seen at a large viewing angle.

Specifically, the incident light on the screen 10 passes through the light diffusion layer 14 and reaches the optical multilayer film 12, and the optical multilayer film 12 transmits the ambient light component contained in the incident light, which is absorbed by the light absorbing layer 13, and only the light in a specific wavelength region responsible for the image is selectively reflected, and the reflected light is diffused by the surface of the light diffusion layer 14 and sent to a viewer as image light at a large viewing angle. Therefore, the adverse effect of ambient light on image light which is the reflected light can be removed at high level, making it possible to achieve even higher contrast than the contrast obtained by a conventional screen.

The screen of the present invention may have a construction shown in FIG. 2, which includes an optical multilayer film having the same structure as that described above formed on the front side of a base, a light diffusion layer formed on the surface of the outermost layer of the optical multilayer film, and a light absorbing layer formed on the back side of the base. This screen reflects the light in a specific wavelength from a projector, and transmits and absorbs incident light in wavelength regions other than the specific wavelength, e.g., ambient light in order to lower the black level on the screen, thus achieving high contrast.

Here, an explanation is made on the materials A and B for optical film, which are coating compositions for forming the first optical film and second optical film.
(1) Material A for optical film
   The material A for optical film contains fine particles, an organic solvent, a binder which absorbs energy to undergo a curing reaction, and a dispersant comprised of a lipophilic group and a hydrophilic group.
   The fine particles are fine particles comprised of a high refractive-index material added for controlling the refractive index of the optical film formed, and examples include oxides of Ti, Zr, Al, Ce, Sn, La, In, Y, Sb, or the like, and alloy oxides of In-Sn or the like. Even if Ti oxide contains an appropriate amount of an oxide of Al, Zr, or the like for suppressing the photocatalytic action, the effect of the present invention is not sacrificed.
   The fine particles preferably have a specific surface area of 55 to 85 m²/g, more preferably 75 to 85 m²/g. When the specific surface area of the fine particles falls in this range, a dispersion treatment for the fine particles enables the fine particles to have a particle size of 100 nm or less in the material for optical film, thus making it possible to obtain an optical film having a very small haze.
   As the organic solvent, for example, a ketone solvent, such as acetone, methyl ethyl ketone, methyl isobutyl ketone, or cyclohexanone; an alcohol solvent, such as methanol, ethanol, propanol, butanol, or isobutyl alcohol; or an ester solvent, such as methyl acetate, ethyl acetate, butyl acetate, propyl acetate, ethyl lactate, or ethylene glycol acetate are used. These organic solvents need not have a purity as high as 100%, and they may contain an impurity, such as an isomer, an unreacted substance, a decomposition product, an oxide, or moisture, in an amount of 20% or less. For applying the composition onto the base or optical film having low surface energy, it is desired to select a solvent having a lower surface tension, and examples of such solvents include methyl isobutyl ketone, methanol, ethanol and the like.
   Examples of binders include thermosetting resins, ultraviolet (UV) curing resins, and electron beam (EB) curing resins. Examples of thermosetting resins, UV curing resins, and EB curing resins include polystyrene resins, styrene copolymers, polycarbonate, phenolic resins, epoxy resins, polyester resins, polyurethane resins, urea resins, melamine resins, polyamine resins, and urea-formaldehyde resins. A polymer having another cyclic (aromatic, heterocyclic, or alicyclic) group may be used. Alternatively, a resin having in its carbon chain fluorine or a silanol group may be used.
   A method of advancing the curing reaction of the resin may be any one of irradiation and heat, but, when the curing reaction of the resin is advanced by ultraviolet light irradiation, it is preferred that the reaction is carried out in the present of a polymerization initiator. Examples of radical polymerization initiators include azo initiators, such as 2,2'-azobisisobutyronitrile and 2,2'-azobis(2,4-dimethylvaleronitrile); and peroxide initiators, such as benzoyl peroxide, lauryl peroxide, and t-butyl peroctoate. The amount of the initiator used is 0.2 to 10 parts by weight, more preferably 0.5 to 5 parts by weight, relative to 100 parts by weight of the sum of the polymerizable monomers.
   The dispersant is comprised of a lipophilic group and a hydrophilic group, and it improves the dispersibility of the fine particles. The lipophilic group in the dispersant has a weight average molecular weight of 110 to 3,000. When the molecular weight of the lipophilic group is lower than 110, a problem occurs in that the dispersant is not satisfactorily dissolved in the organic solvent, and, when the molecular weight is higher than 3,000, satisfactory dispersibility of the fine particles in the optical film cannot be obtained. The dispersant may have a functional group which undergoes a curing reaction with the binder.
   The amount of the polar functional group which is a hydrophilic group contained in the dispersant is 10⁻³ to 10⁻¹ mol/g. When the amount of the functional group is smaller or larger than this range, an effect in respect of dispersion of the fine particles is not exhibited, leading to a lowering of the dispersibility. The functional groups shown below are effective polar functional groups since they cause no aggregation state. Examples include -SO₃M, -OSO₃M, -COOM, P=O(OM)₂ (where M represents a hydrogen atom or an alkali metal, such as lithium, potassium, or sodium), tertiary amines, and quaternary ammonium salts. R₁(R₂)(R₃)NHX (where each of R₁, R₂, and R₃ represents a hydrogen atom or a hydrocarbon group, and X⁻ represents an ion of halogen element, such as chlorine, bromine, or iodine, or an inorganic or organic ion). Further, examples include polar functional groups, such as -OH, -SH, -CN, and an epoxy group. These dispersants can be used individually or in combination. The total amount of the dispersant in the film applied in the present invention is 20 to 60 parts by weight, preferably 38 to 55 parts by weight, relative to 100 parts by weight of the fine particles.
   The material A for optical film is applied to form a film, and then a curing reaction for the film is promoted by irradiation or heat to form a first optical film of a high refractive-index type.
(2) Material B for optical film

The material B for optical film contains an organic solvent and a binder. The binder is dissolved in the organic solvent and, if necessary, fine particles may be added to and dispersed in the solution of the binder.

The binder is a resin having in its molecule a functional group which undergoes a curing reaction by irradiation of ultraviolet light or the like or energy from heat, and preferred is a fluorine resin or the like.

The fine particles are fine particles comprised of a low refractive-index material optionally added for controlling the refractive index of the optical film formed, and examples include SiO₂, MgF₂, hollow fine particles, and fine particles comprised of a fluorine resin. An oxide of Ti, Zr, Al, Ce, Sn, La, In, Y, Sb, or the like or an alloy oxide In-Sn or the like may be added. Even if Ti oxide contains an appropriate amount of an oxide of Al, Zr, or the like for suppressing the photocatalytic action, the effect of the present invention is not sacrificed.

As the organic solvent, for example, ketone solvents, such as acetone, methyl ethyl ketone, methyl isobutyl ketone, and cyclohexanone; alcohol solvents, such as methanol, ethanol, propanol, butanol, and isobutyl alcohol; ester solvents, such as methyl acetate, ethyl acetate, butyl acetate, propyl acetate, ethyl lactate, and ethylene glycol acetate; and fluorine-containing solvents, such as fluorine-containing aromatic hydrocarbons, e.g., perfluorobenzene, pentafluorobenzene, 1,3-bis(trifluoromethyl)benzene, and 1,4-bis(trifluoromethyl)benzene, fluorine-containing alkylamines, e.g., perfluorotributylamine and perfluorotripropylamine, fluorine-containing aliphatic hydrocarbons, e.g., perfluorohexane, perfluorooctane, perfluorodecane, perfluorododecane, perfluoro-2,7-dimethyloctane, 1,3-dichloro-1,1,2,2,3-pentafluoropropane, 1H-1,1-dichloroperfluoropropane, 1H-1,3-dichloroperfluoropropane, 1H-perfluorobutane, 2H,3H-perfluoropentane, 3H,4H-perfluoro-2-methylpentane, 2H,3H-perfluoro-2-methylpentane, perfluoro-1,2-dimethylhexane, perfluoro-1,3-dimethylhexane, 1H-perfluorohexane, 1H,1H,1H,2H,2H-perfluorohexane, 1H,1H,1H,2H,2H-perfluorooctane, 1H-perfluorooctane, 1H-perfluorodecane, and 1H,1H,1H,2H,2H-perfluorodecane, fluorine-containing alicyclic hydrocarbons, e.g., perfluorodecalin, perfluorocyclohexane, and perfluoro-1,3,5-trimethylcyclohexane, and fluorine-containing ethers, e.g., perfluoro-2-butyltetrahydrofuran and fluorine-containing low molecular-weight polyethers, can be used individually or in combination. For example, methyl isobutyl ketone is used as the organic solvent for use in the material A for optical film, and a mixed solvent (95:5) of fluorine-containing alcohol (C₆F₁₃C₂H₄OH) and perfluorobutylamine is used as the organic solvent for use in the material B for optical film. These organic solvents need not have a purity as high as 100%, and they may contain an impurity, such as an isomer, an unreacted substance, a decomposition product, an oxide, or moisture, in an amount of 20% or less.

The material B for optical film is applied to form a film, and then subjected to curing reaction to form a second optical film having a lower refractive index than that of the first optical film.

The preparation of the materials A, B for optical film has a kneading step and a dispersion step, and optionally a mixing step before or after the above steps. Any raw materials used in the present invention including the fine particles, resin, and solvent may be added either at the start of each step or in the course of each step. Each raw material may be divided into two or more portions and added individually in two or more steps. The dispersion and kneading may be conducted using a conventionally known apparatus, such as an agitator or a paint shaker.

Next, the process for producing a reflective screen 10 of the present invention is described below.
(s1) A polyethylene terephthalate (PET) film is prepared as a base 11, and a material A for optical film is applied in a predetermined amount to both surfaces of the base 11 by a dipping method in which the base 11 is dipped in a vessel filled with the material A for optical film and then recovered.
(s2) The films of the material A for optical film are dried to form optical films 12H each having a predetermined thickness.
(s3) Then, a material B for optical film is applied in a predetermined amount to the optical films 12H on both sides of the base 11 by a dipping method in which the base 11 having formed thereon the optical films 12H is dipped in a vessel filled with the material B for optical film and then recovered.
(s4) The films of the material B for optical film are dried to form optical films 12L each having a predetermined thickness, thus forming a stacked structure including the optical film 12H and the optical film 12L.
(s5) Then, the material A for optical film is applied in a predetermined amount to the individual optical films 12L constituting the outermost layers on both sides of the base 11 by a method in which the base 11 having stacked thereon the optical films 12H and 12L is dipped in a vessel filled with the material A for optical film and then recovered.
(s6) The films of the material A for optical film are dried, and then irradiated with ultraviolet light to cure the material A for optical film, forming optical films 12H each having a predetermined thickness. Subsequently, a cycle of treatments in the steps s3 to s6 is repeated predetermined times to form optical multilayer films 12 on both sides of the base 11.
(s7) A low refractive-index, transparent bonding agent (EPOTEK 396; manufactured and sold by Epoxy Technology Inc.) is applied to the optical multilayer film 12 on the front side, and a plate-form light diffusion layer 14 is placed on the bonding agent applied so that the surface of the light diffusion layer 14 on the opposite side of the uneven surface is in contact with the bonding agent, and then the bonding agent is cured so as to serve as a bonding layer for bonding the optical multilayer film 12 to the light diffusion layer 14.
(s8) A resin containing a black light absorber is applied to the optical multilayer film 12 on the back side to form a light absorbing layer 13, thus obtaining a reflective screen 10 of the present invention.

An example is shown in which the materials A, B for optical film are applied by a dipping method, but each of the materials A, B for optical film may be applied by a conventionally known coating method, such as gravure coating, roll coating, blade coating, or die coating.

Further, a screen according to another embodiment of the present invention may have a construction shown in FIG. 2, which includes optical multilayer films 12 each having the same structure as that described above formed respectively on both surfaces of a base 11, a light diffusion layer 14 is formed on the surface of the outermost layer of one optical multilayer film 12, and a light absorbing layer 13 is formed on the surface of the outermost layer of another optical multilayer film 12. This screen 20 reflects the light in a specific wavelength from a projector, and transmits and absorbs incident light in wavelength regions other than the specific wavelength, e.g., ambient light to lower the black level on the screen, thus achieving high contrast.

### (Examples)

Hereinbelow, examples in which the present invention is actually practiced will be described. The following Examples are merely examples, which should not be construed as limiting the scope of the present invention.

### (Example 1)

The formulations and preparation method of a coating composition (I) corresponding to the material A for optical film and a coating composition (II) corresponding to the material B for optical film and the process for producing a screen in Example 1 are described below. The "parts by weight" used below indicates a weight ratio of each ingredient added, relative to the total weight of the materials constituting the coating composition.
(1) Coating composition (I)

| | |
|---|---|
| Fine particles: TiO₂ fine particles (manufactured and sold by Ishihara Sangyo Co., Ltd.; average particle size: about 20 nm; refractive index: 2.48) | 100 parts by weight (2 wt%) |
| Dispersant: silane coupling agent (A-174; manufactured and sold by Nippon Unicar Co., Ltd.) | 20 parts by weight (0.4 wt%) |
| Organic solvent: methyl ethyl ketone | 4,800 parts by weight (97.6 wt%) |

First, the fine particles, dispersant, and organic solvent in predetermined amounts were mixed together and dispersed by means of a paint shaker to obtain a fine particle dispersion. To the fine particle dispersion was added, as a binder, 33 parts by weight (corresponding to 33 wt%, based on the weight of TiO₂) of a mixture of dipentaerythritol hexaacrylate and dipentaerythritol pentaacrylate (trade name: DPHA; manufactured and sold by Nippon Kayaku Co., Ltd.) which are UV curing resins, relative to 100 parts by weight of the TiO₂ fine particles, and 3 parts by weight {corresponding to 3 wt%, based on the weight of the UV curing resin (mixture of dipentaerythritol hexaacrylate and dipentaerythritol pentaacrylate)} of Darocure 1173 relative to the binder was added as a polymerization initiator and agitated by means of an agitator to prepare a coating composition (I). The coating composition had a viscosity of 2.3 cps and a specific gravity of 0.9 g/cm³.
(2) Coating composition (II)
The final formulation of a coating composition (II) for low refractive-index film is shown below.

| | |
|---|---|
| Binder: fluoroethylene copolymer resin (tetrafluoroethylene copolymer; manufactured and sold by DAIKIN INDUSTRIES, Ltd.; solvent: butyl acetate; solids content: 50 wt%; refractive index: 1.42) | 20 parts by weight (16.7 wt%) |
| Organic solvent: methyl isobutyl ketone | 100 parts by weight (83.3 wt%) |

The coating composition had a viscosity of 4.0 cps and a specific gravity of 0.84 g/cm³.
(3) Method for forming an optical film
(s11) The coating composition (I) is applied to both surfaces of a transparent PET film (thickness: 188 µm; trade name: U426; manufactured and sold by Toray Industries Inc.) by a dipping method. The conditions for dipping are as follows.
   - Dipping speed:: 400 mm/min
   - Retention time:: 1 min
   - Recovery speed:: 350 mm/min
(s12) The films of the coating composition (I) are dried at room temperature to form high refractive-index optical films each having a thickness of 780 nm per one surface.
(s13) Then, the coating composition (II) is applied to the high refractive-index optical films by a dipping method. The conditions for dipping are as follows.
   - Dipping speed:: 400 mm/min
   - Retention time:: 1 min
   - Recovery speed:: 160 mm/min
(s14) The films of the coating composition (II) are dried at room temperature to form low refractive-index optical films each having a thickness of 1,120 nm.
(s15) The coating composition (I) is applied to the optical films (II) under the same conditions as those in the step s11.
(s16) The films of the coating composition (I) are dried at room temperature, and then subjected to ultraviolet (UV) curing (500 mJ/cm²) to form high refractive-index optical films each having a thickness of 780 nm per one surface, thus obtaining optical multilayer films each comprised of three layers, i.e., optical film (I)/optical film (II)/optical film (I) on the PET film.

In evaluation of the optical films formed, measurement of a refractive index with respect to each of the optical film (I) and the optical film (II) was conducted by means of Filmetrics (manufactured and sold by Matsushita Inter-techno Co., Ltd.). In addition, measurement of a haze with respect to the optical multilayer film was conducted by means of a haze meter (model JASCO V-560). Further, measurement of reflection properties with respect to the optical multilayer film obtained was conducted by means of Filmetrics (manufactured and sold by Matsushita Inter-techno Co., Ltd.). With respect to the reflection properties, measurement of a reflectance was conducted for each of the wavelength regions of three primary colors, i.e., blue wavelength: 480 nm, green wavelength: 560 nm, and red wavelength: 665 nm.

Further, a black PET film was laminated through an adhesive layer on the surface of the outermost layer of one optical multilayer film obtained, and a diffusion film was laminated through an adhesive layer on the surface of the outermost layer of another optical multilayer film to prepare a screen, and a gain of the screen was measured by means of a spectral radiance luminance meter (CS-1000, manufactured and sold by KONICA MINOLTA HOLDINGS, INC.). The gain indicates a maximum value of the ratio of a luminance (cd/m²) of the screen to a luminance of a white plate when the white plate irradiated with light, which is taken as 1.

Further, a luminance of the screen was measured by means of the above luminance meter to determine a contrast. Specifically, a luminance of the screen irradiated with white light from a projector was measured, and then a luminance of the screen irradiated with black light from the projector was measured, and a contrast was measured from a ratio between the luminance for white light and the luminance for black light.

### (Example 2)

An optical multilayer film and a screen were obtained under substantially the same conditions as those in Example 1 except that the number of the optical films stacked in Example 1 was changed to seven, i.e., optical film (I)/optical film (II)/optical film (I)/optical film (II)/optical film (I)/optical film (II)/optical film (I).

### (Example 3)

A screen was prepared under substantially the same conditions as those in Example 1 except that an optical multilayer film was formed on one main surface of the PET film as the base in Example 1 and a black PET film was laminated on another main surface through an adhesive layer, and a diffusion film was laminated on the surface of the outermost layer of the optical multilayer film through an adhesive layer.

### (Example 4)

A screen was obtained under substantially the same conditions as those in Example 1 except that, instead of the lamination of the black PET film in Example 1, a black coating composition was applied by spray coating to the back surface side of the PET film (surface of the outermost layer of one optical multilayer film), and kept at 75°C for 30 minutes in a drying and curing step to form a light absorbing layer.

The black coating composition obtained by adding a solvent to the composition below was used.

Carbon black fine particles: trade name: ORIGIPLATE; manufactured and sold by Origin ELECTRIC CO., LTD. (primary particle size: 15 nm)

Resin: alkyd resin having a hydroxyl group

As a curing agent, trade name: POLYHARD MH (isocyanate-based), manufactured and sold by Origin ELECTRIC CO., LTD., was used.

### (Example 5)

A screen was obtained under substantially the same conditions as those in Example 2 except that, instead of the lamination of the black PET film in Example 2, the same treatment as that in Example 4 was conducted.

### (Example 6)

A screen was obtained under substantially the same conditions as those in Example 3 except that, instead of the lamination of the black PET film in Example 3, the same treatment as that in Example 4 was conducted.

### (Comparative Example 1)

An optical multilayer film and a screen were obtained under substantially the same conditions as those in Example 1 except that the number of the optical films stacked in Example 1 was changed to one, i.e., optical film (I).

### (Comparative Example 2)

An optical multilayer film and a screen were obtained under substantially the same conditions as those in Example 1 except that the number of the optical films stacked in Example 1 was changed to two, i.e., optical film (I)/optical film (II).

The results are shown in Table 1.

The optical multilayer film of a double-sided three-layer structure in each of Examples 1 and 4 had a reflectance of 55%, and an increase of the reflectance of the optical multilayer film was confirmed in the optical multilayer film having an increased number of stacked layers, and the optical multilayer film of a double-sided seven-layer structure in each of Examples 2 and 5 had a reflectance of 90%. Further, the reflectance of the optical multilayer film of a double-sided three-layer structure (Example 1) was higher by 10 (%) than that of the optical multilayer film of a single-sided three-layer structure in each of Examples 3 and 6.

With respect to the screen, an increase of the gain in proportional to the number of stacked layers constituting the optical multilayer film was confirmed, and, with respect to the screen of a double-sided seven-layer structure, when the light absorbing layer was comprised of a black PET film (Example 2), a gain of 1.8 was obtained, and, when the light absorbing layer was comprised of a black coated film (Example 5), a gain of 2.2 was obtained. Further, the contrast ratios were as follows: 26:1 in Example 1; 42:1 in Example 2; 21:1 in Example 3; 35:1 in Example 4; 55:1 in Example 5:; and 28:1 in Example 6.

The results of the Comparative Examples are as follows.

Comparative Example 1: The optical multilayer film had a reflectance of 17%, and the screen had a gain and a contrast of 0.3 and 8:1, respectively.

Comparative Example 2: The optical multilayer film had a reflectance of 17%, and the screen had a gain and a contrast of 0.3 and 8:1, respectively.

**Table 1**

| | OPTICAL MULTILAYER FILM | | | | | | REFLECTANCE (%) | | | HAZE (%) | GAIN | CONTRAST (400 lumen) |
|---|---|---|---|---|---|---|---|---|---|---|---|---|
| | BASE SURFACE TO BE FORMED | NUMBER OF STACKED LAYERS (PER SURFACE) | OPTICAL FILM (I) | | OPTICAL FILM (II) | | BLUE WAVELENGTH | GREEN WAVELENGTH | RED WAVELENGTH | | | |
| | | | FILM THICKNESS (nm) | FILM REFRACTIVE INDEX | FILM THICKNESS (nm) | FILM REFRACTIVE INDEX | | | | | | |
| EXAMPLE 1 | BOTH-SIDED | 3 LAYERS | 780 | 1.94 | 1120 | 1.34 | 55 | 55 | 55 | 3.0 | 1.1 | 26:1 |
| EXAMPLE 2 | BOTH-SIDED | 7 LAYERS | 780 | 1.94 | 1120 | 1.34 | 90 | 90 | 90 | 4.5 | 1.8 | 42:1 |
| EXAMPLE 3 | ONE-SIDE | 3 LAYERS | 780 | 1.94 | 1120 | 1.34 | 45 | 45 | 45 | 1.2 | 0.9 | 21:1 |
| EXAMPLE 4 | BOTH-SIDED | 3 LAYERS | 780 | 1.94 | 1120 | 1.34 | 55 | 55 | 55 | 3.0 | 1.3 | 35:1 |
| EXAMPLE 5 | BOTH-SIDED | 7 LAYERS | 780 | 1.94 | 1120 | 1.34 | 90 | 90 | 90 | 4.5 | 2.2 | 55:1 |
| EXAMPLE 6 | ONE-SIDE | 3 LAYERS | 780 | 1.94 | 1120 | 1.34 | 45 | 45 | 45 | 1.2 | 1.1 | 28:1 |
| COMPARATIVE EXAMPLE 1 | BOTH-SIDED | 1 LAYER | 780 | 1.94 | 1120 | 1.34 | 17 | 17 | 17 | 1.2 | 0.3 | 8:1 |
| COMPARATIVE EXAMPLE 2 | BOTH-SIDED | 2 LAYERS | 780 | 1.94 | 1120 | 1.34 | 17 | 17 | 17 | 1.4 | 0.3 | 8:1 |

### INDUSTRIAL APPLICABILITY

According to the invention of claim 1, a large size screen having high contrast and high gain can be realized.

According to the invention of claim 2, high reflectance can be achieved.

According to the inventions of claims 3 to 5, the optical multilayer film having properties such that it reflects light in a desired wavelength region and transmits light in wavelength regions other than the above wavelength region can be formed, enabling realization of a screen according to the projector light source and having high contrast and high gain as well as high reflectance.

According to the invention of claim 6, there can be obtained a screen on which favorable image with high contrast for an RGB light source can be seen.

According to the invention of claim 7, favorable image with higher contrast can be seen on the screen.

According to the invention of claim 8, a viewer can see a natural image on the screen by observing the reflected light diffused.

According to the invention of claim 9, a large size screen having high contrast and high gain can be mass-produced.

According to the invention of claim 10, the product yield of the large size screen having high contrast and high gain as well as high reflectance is improved, enabling mass-production of the screen.

According to the inventions of claims 11 and 12, the optical film having a desired refractive index can be formed.

According to the invention of claim 13, there can be produced a screen on which a viewer can see a natural image by observing the reflected light diffused.

According to the invention of claim 14, there can be produced a screen on which favorable image with higher contrast can be seen.

## Claims

1. A screen, **characterized by** comprising:
an optical multilayer film on a base, said optical multilayer film being comprised of (2n+1) layers (where n is an integer of 1 or more), which have a high reflection property with respect to light in a specific wavelength region and a high transmission property with respect to at least visible light in wavelength regions other than said specific wavelength region;
wherein said optical multilayer film is formed by coating.

2. The screen according to claim 1, **characterized in that** said base is transparent and said optical multilayer film is formed on both surfaces of said base by coating.

3. The screen according to claim 1, **characterized in that** said optical multilayer film comprises a stacked structure in which a first optical film having a high refractive index and a second optical film having a lower refractive index than that of said first optical film are alternately stacked on one another and the outermost layer of said optical multilayer film is formed by said first optical film.

4. The screen according to claim 3, **characterized in that** said first optical film is a film containing metal oxide fine particles, a dispersant, and a binder; and said second optical film is a film containing fluorine-containing resin or SiO₂ fine particles.

5. The screen according to claim 4, **characterized in that** said metal oxide fine particles are TiO₂ or ZrO₂ fine particles.

6. The screen according to claim 3, **characterized in that** said specific wavelength region includes wavelength regions of red, green, and blue.

7. The screen according to claim 1, **characterized by** comprising a light absorbing layer for absorbing light which has transmitted through said optical multilayer film.

8. The screen according to claim 1, **characterized by** comprising a light diffusion layer for diffusing light reflected by said optical multilayer film, on the outermost layer of said optical multilayer film.

9. A method for producing a screen including an optical multilayer film on a base, said optical multilayer film being comprised of (2n+1) layers (where n is an integer of 1 or more), which have a high reflection property with respect to light in a specific wavelength region and a high transmission property with respect to at least visible light in wavelength regions other than said specific wavelength region; wherein
a production process for producing said optical multilayer film comprises:
a first coating step for forming by coating a first optical film having a high refractive index;
a second coating step for forming by coating a second optical film having a lower refractive index than that of said first optical film; and
said first coating step and said second coating step are alternately conducted.

10. A method for producing a screen including optical multilayer films on both surfaces of a transparent base, each optical multilayer film being comprised of (2n+1) layers (where n is an integer of 1 or more), which have a high reflection property with respect to light in a specific wavelength region and a high transmission property with respect to at least visible light in wavelength region other than said specific wavelength region; wherein
a production process for producing said optical multilayer films comprises:
a first coating step for forming by dipping a first optical film having a high refractive index, on both surfaces of a base to be coated;
a second coating step for forming by dipping a second optical film having a lower refractive index than that of said first optical film, on said both surfaces of a base to be coated; and
said first coating step and said second coating step are alternately conducted.

11. The method for producing a screen according to claim 10, **characterized by** comprising:
a step for forming a light absorbing layer for absorbing light which has transmitted through said optical multilayer film, on the outermost layer of one side of said optical multilayer film.

12. The method for producing a screen according to claim 11, **characterized by** comprising:
a step for forming a light diffusion layer for diffusing light reflected by said optical multilayer film, on the outermost layer of the other side of said optical multilayer film.
